# EUROPÄISCHE PATENTSCHRIFT

(11) **EP 0 992 151 B1**
(45) Veröffentlichungstag und Bekanntmachung des Hinweises auf die Patenterteilung: **17.11.2004**
(21) Anmeldenummer: 98958877.7
(22) Anmeldetag: 28.10.1998
(51) Int. Cl.: H04M 9/08

(54) **VERFAHREN UND VORRICHTUNG ZUR ECHOUNTERDRÜCKUNG BEI EINER FREISPRECHEINRICHTUNG, INSBESONDERE FÜR EIN TELEFON**
METHOD AND DEVICE FOR SUPPRESSING ECHO IN A HANDS FREE DEVICE SUCH AS A TELEPHONE
PROCEDE ET DISPOSITIF PERMETTANT D'ATTENUER L'ECHO DANS UN DISPOSITIF MAINS LIBRES, TEL QU'UN TELEPHONE

(30) Priorität: 01.12.1997 DE 19753224
(43) Veröffentlichungstag der Anmeldung: 12.04.2000
(73) Patentinhaber: Deutsche Telekom AG, 53113 Bonn (DE)
(72) Erfinder: TAEGE, Peter, D-10409 Berlin (DE)
(86) Internationale Anmeldenummer: PCT/EP1998/006840
(87) Internationale Veröffentlichungsnummer: WO 1999/029093

(56) Entgegenhaltungen:
- EP-A- 0 413 641
- EP-A- 0 739 123
- DE-A- 4 305 256

## Beschreibung

Die Erfindung bezieht sich auf eine Vorrichtung zur Echounterdrückung bei einer Freisprecheinrichtung, insbesondere für ein Telefon, gemäß dem Oberbegriff von Anspruch 1 sowie auf ein Verfahren zur Echounterdrückung gemäß dem Oberbegriff von Anspruch 10.

Es sind Echokompensatoren mit adaptivem Filter für Freisprecheinrichtungen bekannt, welche die Verstärkung von im Sende- und Empfangsweg der Freisprecheinrichtung angeordneten steuerbaren Verstärkern entsprechend der Sprachaktivität des nahen bzw. fernen Teilnehmers verädern. Mit den bekannten Raum-Echokompensatoren erreicht man in der Praxis Echodämpfungen von 20 bis 30 dB. Somit bleibt, bedingt durch zu kurze Filterlänge des adaptiven Filters, durch nicht exakten Abgleich wegen vorhandener Störungen oder durch Nichtlinearitäten, ein Restecho bestehen.

Zu seiner Verringerung wird in DE 41 19 936 ein nichtlineares Filter vorgeschlagen, das auch als eine Weiterentwicklung des center-clipper (s.dazu "Der Fernmeldeingenieur", 1/95, S. 32) angesehen werden kann. Die Nachteile dieser Anordnung bestehen jedoch in der Nichtlinearität des Filters, die bei kleinen Pegeln zu Signalverzerrungen führt.

Eine andere Möglichkeit zur Reduktion des Restechos ist die Anwendung der Pegelwaage, die z.B. in DE 43 05256 A1, DE 3 928 805, EP 0 415 031 A2, vorgeschlagen wird und auch in "Der Fernmeldeingenieur", 10/94, S. 11, beschrieben ist. Dabei befinden sich im Sende- und im Empfangspfad jeweils steuerbare Verstärker. Ihre Verstärkung wird ausgehend von einem Ruhewert gegenläufig so verändert, dass das Produkt der Verstärkungen konstant bleibt. Mit der Pegelwaage werden zwar Nichtlinearitäten vermieden, ihr Nachteil ist jedoch, daß im Ruhezustand oder bei Gegensprechen in beiden Richtungen eine Dämpfung wirksam ist, die dem halben Hub der Pegelwaage gleich ist.

In der Patentschrift EP 0 471 083 A1 ist eine Freisprecheinrichtung mit Echokompensatoren und zusätzlichen einstellbaren Verstärkern beschrieben. Zur Steuerung der Verstärker werden das Empfangssignal und das Sendesignal in einer Steuerschaltung ausgewertet und die Verstärker werden zwischen zwei Verstärkungen umgeschaltet.

Diese Anordnung hat den Nachteil, daß das Sendesignal bei Parameteränderungen ansteigt und eine Aktivität des nahen Sprechers vortäuscht. Obwohl die Steuerschaltung in der Patentbeschreibung nicht ausführlich erläutert wurde, kann angenommen werden, daß das Produkt beider Verstärkungen konstant gehalten wird. Demzufolge handelt es sich hier um eine Form der Pegelwaage, bei der im Empfangspfad eine hohe Dämpfung und im Sendepfad eine geringe Dämpfung eingestellt wird, wenn der nahe Teilnehmer spricht. Spricht der ferne Teilnehmer, dann sind die Verhältnisse umgekehrt.

Die Nachteile dieser Anordnung bestehen darin, daß beim nahen Teilnehmer, wenn er spricht, leicht der Eindruck einer fehlerhaften Verbindung auftritt, und daß bei Gegensprache durch das Umschalten der Verstärkung Störungen entstehen.

Der Erfindung liegt daher die Aufgabe zugrunde, eine Verbesserung der Raum-Echokompensation von Freisprecheinrichtungen insbesondere bei Gegensprache, zu erreichen. Es soll ein Algorithmus für die Einstellung der Verstärkungen der beiden Verstärker im Sende- bzw. Empfangspfad zur Verfügung gestellt werden, mit welchem eine große zusätzliche Dämpfung für das Restecho erreicht wird, ohne daß der natürliche Gesprächseindruck darunter leidet. Dabei sollen durch Parameteränderungen hervorgerufene Fehlentscheidungen der Steuerlogik vermieden werden.

Diese Aufgabe wird erfindungsgemäß gelöst durch eine Vorrichtung zur Echounterdrückung bei einer Freisprecheinrichtung, insbesondere für ein Telefon, die einen adaptiven Filter, eine Steuerschaltung sowie im Sende- und Empfangsweg angeordnete einstellbare Verstärker aufweist, deren Verstärkung von der Steuerschaltung mit Steuersignalen Vᵢₙ, Vₒᵤₜ gesteuert wird, wobei die Steuerschaltung einen ersten Kurzzeit-Leistungsschätzer enthält, der an seinem Ausgang ein Signal P_{f} als Maß für die Leistung des Empfangssignals U_{f} vom fernen Teilnehmer abgibt. Weiterhin sind in der Steuerschaltung ein oder mehrere weitere Leistungsschätzer vorgesehen, deren Ausgangssignale für sich genommen oder in Kombination ein Maß Pₙ für die Leistung des nahen Teilnehmers bilden. Aus den Größen Pₙ und P_{f} wird eine erste Steuergröße U₁=Pₙ+P_{f} sowie eine zweite Steuergröße U₂=Pₙ/P_{f} gebildet. Eine Steuerlogik verarbeitet die Steuergrößen U₁, U₂ nach folgender Vorschrift zu den Ausgangssignalen Vτ, V₁ und V₂ , wobei S₀ und S₁ vorbestimmte Schwellwerte sind, S₁<1 und α , β<1 ist:
Falls U₁<S₀, dann entspricht Vτ=0, V₁=1 und V₂=β;
Falls U₁>S₀ und U₂<S₁, dann entspricht Vτ=0, V₁=α und V₂=1;
Falls U₁>S₀ und U₂>1/S₁, dann entspricht Vτ=1, V₁=1 und V₂=β;
Falls U₁>S₀ und 1/S₁>U₂>S₁, dann entspricht Vτ=1, V₁=1 undV₂=1.
Die Signale V₁ und V₂, werden jeweils einem dem Sende- bzw. Empfangspfad der Freisprecheinrichtung zugeordneten nichtlinearen Formfilter zugeführt, dessen Ausgangssignal Vₒᵤₜ bzw. Vᵢₙ die Verstärkung des jeweiligen Verstärkers proportional zu seiner Größe steuert, wobei das Steuersignal Vτ abhängig von seinem Pegel zwei unterschiedliche Zeitkonstanten τ₀, τ₁ des Formfilters im Sendepfad einstellt.

Verfahrensmäßig wird die Aufgabe gelöst durch ein Verfahren zur Echounterdrückung bei einer Freisprecheinrichtung mit einem Empfangspfad, wenigstens bestehend aus einem regelbaren Verstärker sowie einem Lautsprecher, und einem Sendepfad, wenigstens bestehend aus einem regelbaren Verstärker sowie einem Mikrofon, wobei die Verstärkung V_{S} bzw. V_{E} der regelbaren Verstärker im Sende- bzw. Empfangspfad der Sprachaktivität des fernen bzw. nahen Teilnehmers angepaßt wird und zur Bestimmung der Sprachaktivität des fernen Teilnehmers die Leistung P_{f} des Empfangssignals U_{f} mit einem Leistungsschätzer bestimmt wird, welches durch folgende Merkmale gekennzeichnet ist:
a) mittels ein oder mehrerer weitere Leistungsschätzer, deren Ausgangssignale für sich genommen oder in Kombination ein Maß Pₙ für die Leistung des nahen Teilnehmers darstellen, wird die Sprachaktivität des nahen Teilnehmers bestimmt;
b) die Verstärkung der regelbaren Verstärker wird ausgehend von den Ruhewerten V_{S}=1 und V_{E}=β angepaßt, wenn das Summensignal U₁=Pₙ+P_{f} eine vorbestimmte Rauschschwelle So übersteigt,
c) für den Fall, daß der ferne Teilnehmer spricht, wird die Verstärkung V_{S} im Sendepfad momentan auf den Wert α<1 und die Verstärkung V_{E} im Empfangspfad momentan auf den Wert 1 eingestellt;
d) für den Fall, daß der nahe Teilnehmer spricht, wird die Verstärkung V_{S} im Sendepfad auf den Wert 1 und die Verstärkung V_{E} im Empfangspfad auf den Wert β<1 eingestellt, wobei die Übergänge exponentiell mit der Zeitkonstanten τ₁ im Sendepfad und einer davon unabhängigen Zeitkonstanten im Empfangspfad verlaufen;
e) für den Fall der Gegensprache sind die Verstärkungen V_{S} und V_{E} gleich 1, wobei der Übergang im Empfangspfad momentan und der Übergang im Sendepfad exponentiell mit der Zeitkonstanten τ₁ erfolgt;
f) für den Fall fehlender Sprache wird die Verstärkung V_{S} auf den Wert 1 und die Verstärkung V_{E} auf den Wert β eingestellt, wobei die Übergänge exponentiell mit der Zeitkonstanten τ₀>τ₁ im Sendepfad und einer davon unabhängigen Zeitkonstanten im Empfangspfad verlaufen.

Eine Anpassung der Verstärkung der regelbaren Verstärker zur Echokompensation entsprechend der verschiedenen Gesprächsmodi findet statt, wenn das Summensignal U₁=Pₙ+P_{f} eine vorbestimmte Rauschschwelle S₀ übersteigt, wobei die Unterscheidung der Gesprächsmodi "Sprechen" des fernen bzw. nahen Teilnehmers und "Gegensprache" mittels der Steuergröße U₂=Pₙ/P_{f} un einem vorbestimmten Schwellwert S₁<1 getroffen wird. Dabei entspricht U₂<S₁ dem Sprechen des fernen Teilnehmers, U₂>1/S₁ dem Sprechen des nahen Teilnehmers und 1/S₁>U₂>S₁ der Gegensprache.

Das Signal Pₙ als Maß für die Sprachaktivität des nahen Teilnehmers wird beispielsweise auf folgende Weise gewonnen: Die Vorrichtung enthält einen zweiten Leistungsschätzer, der an seinem Ausgang ein Signal P_{LRM} als Maß für die Leistung des Ausgangssignals U_{LRM} des Lautsprecher-Mikrofon-Raum-Systems (LRM-System) abgibt, und einen dritten Leistungsschätzer, der mit dem Ausgang des adaptiven Filters (Modell) U_{M} verbunden ist und dessen Ausgangssignal P_{M} ein Maß für dessen Leistung ist. Der adaptive Filter dient als Referenz und soll die reinen Raumeigenschaften simulieren. Mittels einer Subtraktionsstufe wird die Differenz der Größen P_{LRM} und P_{M} gebildet, wobei dann das Ausgangssignal Pₙ=P_{LRM}-P_{M} der Subtraktionsstufe ein Maß für die Sprachaktivität des nahen Teilnehmers ist. Weiterhin werden durch geeignete logische Elemente aus den Größen Pₙ und P_{f} die Steuergrößen U₁ und U₂ gebildet.

Die Weiterentwicklung der Steuervorrichtung geht von der Erkenntnis aus, daß das Prinzip der Pegelwaage verlassen werden muß, wenn einerseits ein natürlicher Gesprächseindruck entstehen soll und andererseits eine große zusätzliche Dämpfung des Restechos des Echokompensators erzielt werden soll.

Wenn nur der ferne Sprecher aktiv ist, wird in den Sendepfad eine Dämpfung eingeschaltet. Die Verstärkung im Empfangspfad wird dabei auf 1 eingestellt. Sind sowohl der nahe als auch der ferne Sprecher aktiv, dann werden die Verstärkungen im Sende und Empfangspfad auf 1 eingestellt. Ist nur der nahe Sprecher aktiv, dann wird die Verstärkung im Sendepfad auf 1 eingestellt, während im Empfangspfad eine Dämpfung eingestellt wird.

Im Sendepfad wird eine erforderliche Dämpfung momentan eingestellt, während der Übergang zur Verstärkung von 1 nach einer Exponentialfunktion mit einer bestimmten Zeitkonstante erfolgt.

Im Empfangspfad erfolgt der Übergang zu einer Dämpfung nach einer Exponentialfunktion und der Anstieg auf die Verstärkung von 1 momentan.

Durch diese Form der Steuerung werden bei Gegensprache die Signale beider Teilnehmer ohne Dämpfung weitergegeben. Dadurch ist ein natürlicher Gesprächseindruck gegeben. Unabhängig davon kann die Dämpfung im Sendepfad eingestellt werden und ergibt dadurch die angestrebte zusätzliche Unterdrückung des Restechos.

Befindet sich in dem Raum des einen Teilnehmers zusätzlich eine Geräuschquelle, dann kann die durch die Sprache des zweiten Teilnehmers gesteuerte Änderung der Verstärkung bei diesem einen unangenehmen Eindruck hinterlassen. In diesem Fall kann es zweckmäßig sein, die minimale Verstärkung abhängig vom Pegel des Umgebungsggeräusches so zu steuern, daß sie bei größerer Summe der gewichteten Geräuschpegel aus beiden Räumen größer wird.

Da die Größe des Restechos des Echokompensators von den Raumeigenschaften abhängt und z.B. bei Räumen mit starkem Hall größer wird, kann es in diesem Fall zweckmäßig sein, die minimale Verstärkung zu verringern. Dabei kann die Verstärkung auch automatisch in die Gegebenheiten angepasst werden.

Ein Maß für die Sprachleistung des nahen Teilnehmers kann in bekannter Weise mittels eines Leistungsschätzers aus dem Adaptionsfehler e gewonnen werden.

Sind größere Parameteränderungen im LRM-System zu erwarten, dann besteht eine vorteilhafte Ausführung der Erfindung darin, daß ein Maß für die Sprachleistung des nahen Teilnehmers als Differenz der Ausgangsleistungen von Modell und LRM-System gewonnen wird, wodurch die Abhängigkeit von Parameteränderungen im LRM-System verringert wird. Die Differenz soll möglichst gut die Sprachleistung des nahen Teilnehmers annähern. Das wird am ehesten durch eine quadratische Gleichrichtung erreicht.

Bei größeren Umgebungsgeräuschen wird deren Leistung als Sprachaktivität gewertet. Um das zu vermeiden, wird ein Maß für die Sprachleistung als Differenz eines oberen Leistungskennwertes, der näherungsweise der Summe von Sprach- und Geräuschleistung entspricht, von einem unteren Leistungskennwert, der näherungsweise ein Maß für die Geräuschleistung darstellt, gebildet.

Trotz Optimierung der Zeitkonstanten der Verstärker kann es bei Gegensprache, falls kurzzeitig die Leistung des nahen Teilnehmers absinkt, dazu kommen, daß durch die Steuereinrichtung eine Dämpfung bei dem Verstärker des Sendepfads eingestellt wird. Um dies zu vermeiden, werden in vorteilhafter Weiterbildung der Erfindung diese Leistungseinbrüche durch ein Zeitglied überbrückt. Immer dann, wenn Gegensprache erkannt wurde, wird es gestartet und hält die Ausgangsgrößen V₁,V₂ und V_{τ} der Steuerlogik für eine bestimmte Verzögerungszeit, die z.B. 0,3 s beträgt, konstant auf den Werten bei Gegensprache fest, auch wenn die momentanen Steuergrößen einseitiger Sprache entsprechen. Erst nach Ablauf dieser Zeit werden die Eingangsgrößen der Steuerlogik erneut ausgewertet.

Kurzbeschreibung der Zeichnung, in der zeigen:
- Figur 1: eine Freisprecheinrichtung mit jeweils einem regelbaren Verstärker im Sende- bzw. Empfangspfad
- Figur 2: eine Steuerschaltung zur Gewinnung der Steuersignale Vᵢₙ, Vₒᵤₜ aus den Eingangssignalen U_{f}, U_{M}, U_{LRM} zur Anpassung der Verstärkungen der regelbaren Verstärker

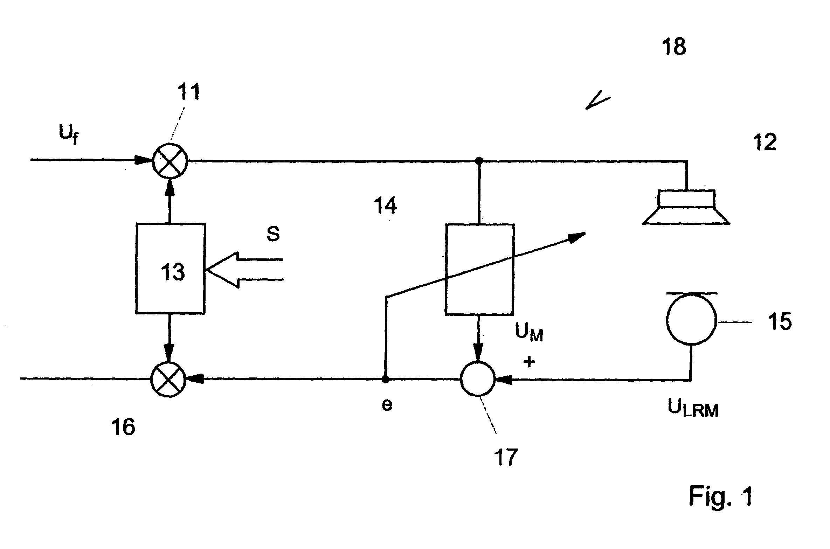

In Figur 1 ist eine Freisprecheinrichtung 18 dargestellt, bei der das Signal des fernen Teilnehmers U_{f} über einen Verstärker 11 zum Lautsprecher 12 geführt ist. Es gelangt ferner zu dem adaptiven Filter 14, welches im Idealfall durch die Adaption so eingestellt ist, daß es das Verhalten des aus Lautsprecher 12, Raum und Mikrofon 15 bestehenden LRM-Systems vollständig nachbildet und somit als Referenz zur Bestimmung der tatsächlichen Sprachaktivität des nahen Teilnehmers dienen kann.

In der Praxis gelingt es jedoch in der Regel nicht, ein exaktes Modell des LRM-Systems zu ermitteln. Daher bleibt nach Abzug des Ausgangssignals des Modells UM vom Ausgang U_{LRM} mittels des Addieres 17 auch nach Abschluß der Adaption ein Restfehler e bestehen, der durch die einstellbaren Verstärker 11, 16 in Verbindung mit der Steuereinrichtung 13 weiter verringert werden soll.

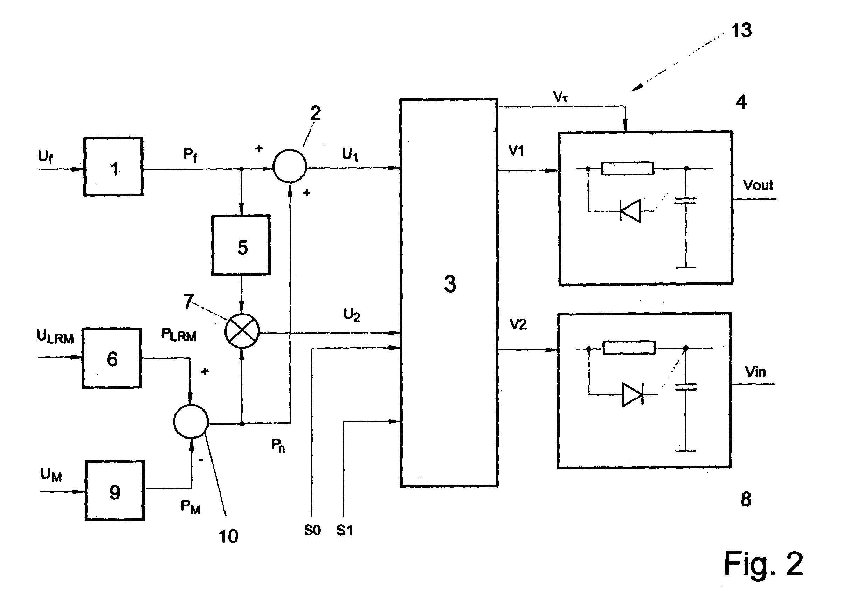

Figur 2 zeigt eine Ausführungsform der Steuereinrichtung 13 gemäß der Erfindung.

Das Signal U_{f} vom fernen Teilnehmer gelangt auf einen ersten Kurzzeitleistungsschätzer 1, dessen Ausgangssignal P_{f} stellt ein Maß für die Sprachaktivität des fernen Teilnehmers dar. Ein Maß für die Sprachaktivität Pₙ des nahen Teilnehmers wird dadurch erhalten, daß mittels zweier weiterer Leistungschätzer 6, 9 die Kurzzeitleistungen P_{M} und P_{LRM} der Signale U_{M} am Ausgang des Modells, d.h. des adaptiven Filters 14, und U_{LRM} am Ausgang des LRM-Systems geschätzt werden und anschließend durch den Subtrahierer 10 ihre Differenz Pₙ gebildet wird.

Aus den Größen P_{f} und Pₙ werden nun Steuersignale U₁, U₂ gewonnen, wobei gilt U₁ = P_{f} + Pₙ und U₂ = Pₙ/P_{f} . Zur Bestimmung von U₁ werden die Ausgänge des Leistungsschätzers 1 sowie der Subtraktionsstufe 10 in einem Addierer 2 addiert. Zur Bestimmung von U₂ wird in einem logischen Element 5 der Kehrwert der Größe P_{f} gebildet und in einem Multiplikator 7 mit der Größe Pₙ multipliziert. Die Steuersignale U₁, U₂ werden in einer Entscheidungslogik 3 nach folgender Vorschrift zu den Ausgangssignalen Vτ, V₁ und V₂, wobei S₀ und S₁ vorbestimmte Schwellwerte sind, S₁<1 und α, β<1 ist:
Falls U₁<S₀, dann entspricht Vτ=0, V₁=1 und V₂=β;
Falls U₁>S₀ und U₂<S₁, dann entspricht Vτ=0, V₁=α und V₂=1;
Falls U₁>S₀ und U₂>1/S₁, dann entspricht Vτ=1, V₁=1 und V₂=β;
Falls U₁>S₀ und 1/S₁>U₂>S₁, dann entspricht Vτ=1, V₁=1 undV₂=1.

Das Steuersignal Vτ stellt abhängig von seinem Pegel zwei unterschiedliche Zeitkonstanten τ₀, τ₁ des Formfilters 4 im Sendepfad ein, wobei τ₀>τ₁ ist.

Im ersten Zustand mit U₁<S₀ liegen die Pegel des Empfangs- bzw. Ausgangssignals unterhalb der vorbestimmten Rauschschwelle S₀, so daß weder auf der Seite des fernen noch des nahen Teilnehmers Sprachaktivität vorliegt. Es braucht daher keine Auswertung der Signale im Hinblick auf die Anpassung der Verstärkungen im Sende- bzw. Empfangspfad stattzufinden. Der Schwellwert S₀ sichert, daß die Auswertung erst bei deutlich über dem Grundrauschen liegenden Signalen beginnt.

Die Bildung des Quotienten in Verbindung mit der Schwelle S₁ sorgt dafür, dss Gegensprache auch dann noch erkannt wird, wenn sich die beiden Pegel unterscheiden. Die drei Ausgangssignale Vτ, V₁ und V₂ der Entscheidungslogik 3 steuern erfindungsgemäß zwei nichtlineare Formfilter 4 bzw. 8, welche dem Sende- bzw. Empfangspfad der Freisprecheinrichtung zugeordnet sind und den zeitlichen Verlauf der Steuersignale Vₒᵤₜ und Vᵢₙ für die steuerbaren Verstärker 16 bzw. 11 bestimmen.

Das Formfilter 4, welches das Steuersignal Vₒᵤₜ für den im Sendeweg liegenden Verstärker 16 liefert, ist nach Art eines Minimumschätzers so ausgebildet, daß es Verringerungen des Eingangssignals unmittelbar folgt, bei einer Vergrößerung des Eingangssignals folgt es jedoch verzögert.

Das Formfilter 8 für das Steuersignal Vᵢₙ des im Empfangsweg liegenden Verstärkers 11 überträgt nach Art eines Maximumschätzers eine Vergrößerung des Eingangssignals schnell und folgt einer Verkleinerung verzögert.

Die Gewinnung eines Maßes für die Sprachaktivität des nahen Teilnehmers stellt ein besonderes Problem dar. Es ist üblich, dafür die Leistung des Adaptionsfehlers e zu verwenden. Dieser steigt jedoch bei Parameteränderungen an und täuscht dann Sprachaktivität des nahen Teilnehmers vor. Durch die erfindungsgemäße Verwendung der Differenz der Leistungen von Modellausgang P_{M} und Ausgang des LRM-Systems P_{LRM} wird dieser Mangel weitgehend abgestellt. Damit die Leistung des nahen Teilnehmers nicht durch das Echosignal am Ausgang des LRM-Systems verfälscht wird, ist es zweckmäßig, in den Leistungsschätzern Quadrierer vorzusehen.

Um den Einfluß eines in Näherung konstanten Umgebungsgeräusches zu verringern, kann es zweckmäßig sein, eine Geräuschbefreiung vorzusehen, indem man von einem Maximalwert der Leistung einen Minimalwert, der etwa der Leistung des Umgebungsgeräusches entspricht, abzieht.

Trotzdem enthält die Größe Pₙ immer noch Anteile, die vom Signal des fernen Teilnehmers U_{f} herrühren. Durch die erfindungsgemäße Bildung des Quotienten der beiden Aktivitätsmaße in Verbindung mit einer geeignet gewählten Schwelle S₁ gelingt es, Fehlentscheidungen weitgehend zu vermeiden. In der Figur 2 wird der Quotient U₂ = Pₙ/P_{f} gebildet. Es ist ohne weiteres klar, daß bei entsprechender Veränderung der Vergleichswerte in der Entscheidungslogik statt dessen auch der dazu reziproke Wert verwendet werden kann.

Vielfach stellt die Bildung eines Quotienten oder eines reziproen Werts ein Problem dar. In der Steuerschaltung 13 wird die durch Quotientenbildung entstandene Größe U₂ mit vorbestimmten Steuerwerten verglichen, z.B. wird die Ungleichung U₂ <S₁ getestet. Mit U₂ = Pₙ/P_{f} ergibt sich daraus Pₙ/P_{f} <S₁ bzw. Pₙ<S₁*P_{f}. Die Bildung eines Quotienten kann daher auch durch eine einfache Multiplikation mit einer festen Größe S₁ ersetzt werden.

### Liste der Bezugszeichen:

- 1, 6, 9: Leistungsschätzer
- 2, 10, 17: Addierer/ Subtrahierer
- 3: Steuereinrichtung
- 4, 8: Formfilter
- 5: Reziprokwertbildner
- 7: Multiplizierer
- 11, 16: regelbare Verstärker
- 12: Lautsprecher
- 13: Steuereinrichtung
- 14: Adaptives Filter
- 15: Mikrofon

- U_{f}: Signal vom fernen Teilnehmer
- U_{LRM}: Ausgangssignal des Lautsprecher-Raum-Mikrofon-Systems
- U_{M}: Ausgangssignal des Modells
- U₁: Steuersignal
- U₂: Steuersignal
- Vτ: Ausgangssignal der Entscheidungslogik
- V₁: Ausgangssignal der Entscheidungslogik
- V₂: Ausgangsignal der Entscheidungslogik
- Vₒᵤₜ: Ausgangssignal des Formfilters
- Vᵢₙ: Ausgangssignal des Formfilters
- V_{E}: Verstärkung im Empfangspfad
- V_{S}: Verstärkung im Sendepfad
- S₀: Schwellwert (Rauschen)
- S₁: Schwellwert (akzeptierter Pegelunterschied bei Gegensprache)
- e: Kompensationsfehler
- S: Steuersignale
- α, β: Dämpfungen
- τ₀, τ₁: Zeitkonstanten des Formfilters im Sendepfad

## Patentansprüche

1. Vorrichtung zur Echounterdrückung bei einer Freisprecheinrichtung (18), insbesondere für ein Telefon, die einen adaptiven Filter (14), eine Steuerschaltung (13) sowie im Sende- und Empfangsweg angeordnete einstellbare Verstärker (11, 16) aufweist, deren Verstärkung von der Steuerschaltung (13) mit Steuersignalen Vᵢₙ, Vₒᵤₜ gesteuert wird, wobei die Steuerschaltung (13) einen ersten Kurzzeit-Leistungsschätzer (1) enthält, der an seinem Ausgang ein Signal P_{f} als Maß für die Leistung des Empfangssignals U_{f} vom fernen Teilnehmer abgibt, **gekennzeichnet durch** folgende Merkmale,
a) in der Steuerschaltung sind ein oder mehrere weitere Leistungsschätzer (6, 9) vorgesehen, deren Ausgangssignale für sich genommen oder in Kombination ein Maß Pₙ für die Leistung des nahen Teilnehmers bilden;
b) aus den Größen Pₙ und P_{f} wird eine erste Steuergröße U₁=Pₙ+P_{f} sowie eine zweite Steuergröße U₂=Pₙ/P_{f} gebildet;
c) eine Steuerlogik (3) verarbeitet die Steuergrößen U₁,U₂ nach folgender Vorschrift zu den Ausgangssignalen Vτ, V₁ und V₂, wobei S₀ und S₁ vorbestimmte Schwellwerte sind, S₁<1 und α , β<1 ist:
c1) falls U₁<S₀, dann entspricht Vτ=0, V₁=1 und V₂=β;
c2) falls U₁>S₀ und U₂<S₁, dann entspricht Vτ=0, V₁=α und V₂=1;
c3) falls U₁>S₀ und U₂>1/S₁, dann entspricht Vτ=1, V₁=1 und V₂=β;
c4) falls U₁>S₀ und 1/S₁>U₂>S₁, dann entspricht Vτ=1, V₁=1 undV₂=1;
d) die Signale V₁ und V₂, werden jeweils einem dem Sende- bzw. Empfangspfad der Freisprecheinrichtung (18) zugeordneten nichtlinearen Formfilter (4) bzw. (8) zugeführt, dessen Ausgangssignal Vₒᵤₜ bzw. Vᵢₙ die Verstärkung des Verstärkers (16) bzw. (11) proportional zu seiner Größe steuert, wobei das Steuersignal Vτ abhängig von seinem Pegel zwei unterschiedliche Zeitkonstanten τ₀, τ₁ des Formfilters (4) einstellt.

2. Vorrichtung nach Anspruch 1, **dadurch gekennzeichnet,**
**daß** das Signal Pₙ als Maß für die Leistung des nahen Teilnehmers mittels eines Leistungsschätzers direkt aus dem Adaptionsfehler e gewonnen ist.

3. Vorrichtung nach Anspruch 1, **dadurch gekennzeichnet,**
**daß** ein zweiter Leistungsschätzer (6) an seinem Ausgang ein Signal P_{LRM} als Maß für die Leistung des Ausgangssignals U_{LRM} des Lautsprecher (12)-Mikrofon (15)-Raum-Systems abgibt und ein dritter Leistungsschätzer (9) mit dem Ausgang des adaptiven Filters (Modell) U_{M} verbunden ist, wobei sein Ausgangssignal P_{M} ein Maß für dessen Leistung ist, und daß mittels einer Subtraktionsstufe (10) die Differenz der Größen P_{LRM} und P_{M} gebildet wird, die einen Schätzwert für die Leistung Pₙ des nahen Teilnehmers ist.

4. Vorrichtung nach einem der vorangegangenen Ansprüche, **dadurch gekennzeichnet,**
**daß** das dem Sendepfad zugeordnete Formfilter (4) als Miniumschätzer und das dem Empfangspfad zugeordnete Formfilter (8) als Maximumschätzer ausgebildet ist.

5. Vorrichtung nach einem der vorangegangenen Ansprüche, **dadurch gekennzeichnet,**
**daß** τ₀>τ₁ ist.

6. Vorrichtung nach einem der vorangegangenen Ansprüche, **dadurch gekennzeichnet,**
**daß** die Dämpfungen α und/oder β abhängig von Raumparametern und/oder Geräuschspannungen verändert werden.

7. Vorrichtung nach einem der vorangegangenen Ansprüche, **dadurch gekennzeichnet,**
**daß** in den Leistungsschätzern (1, 6, 9) zur Bestimmung von P_{f}, P_{M}, P_{LRM} , Pₑ die jeweiligen Signale U_{f}, U_{M}, U_{LRM}, e quadriert und anschließend gemittelt werden.

8. Vorrichtung nach einem der vorangegangenen Ansprüche, **dadurch gekennzeichnet,**
**daß** die Leistungsschätzer (1, 6, 9) einen vom Umgebungsgeräusch befreiten Wert durch Subtraktion eines unteren Leistungskennwertes von einem oberen Leistungskennwert bilden.

9. Vorrichtung nach einem der vorangegangenen Ansprüche, **dadurch gekennzeichnet,**
**daß** die Steuerlogik (3) ein Zeitglied enthält, welches jedesmal, wenn U₁>S₀ und 1/S₁>U₂>S₁ gilt, gestartet wird und dann seinen binären Ausgang von 0 auf 1 ändert und nach einer vorgegebenen Verzögerungszeit T_{V} in die Ausgangslage zurückfällt, und daß die Ausgangssignale der Steuerlogik (3) auf die Werte Vτ=1, V₁=1 und V₂=1 eingestellt werden, solange das Ausgangssignal des Zeitglieds 1 ist.

10. Verfahren zur Echounterdrückung bei einer Freisprecheinrichtung (18) mit einem Empfangspfad, wenigstens bestehend aus einem regelbaren Verstärker (11) sowie einem Lautsprecher (12), und einem Sendepfad, wenigstens bestehend aus einem regelbaren Verstärker (16) sowie einem Mikrofon (15), wobei die Verstärkung V_{S} bzw. V_{E} der regelbaren Verstärker (11, 16) im Sende- bzw. Empfangspfad der Sprachaktivität des fernen bzw. nahen Teilnehmers angepaßt wird und zur Bestimmung der Sprachaktivität des fernen Teilnehmers die Leistung P_{f} des Empfangssignals U_{f} mit einem Leistungsschätzer (1) bestimmt wird,
**gekennzeichnet durch** folgende Merkmale:
a) mittels ein oder mehrerer weiterer Leistungsschätzer (6, 9), deren Ausgangssignale für sich genommen oder in Kombination ein Maß Pₙ für die Leistung des nahen Teilnehmers darstellen, wird die Sprachaktivität des nahen Teilnehmers bestimmt;
b) die Verstärkung der regelbaren Verstärker (11, 16) wird ausgehend von den Ruhewerten V_{S}=1 und V_{E}=β angepaßt, wenn das Summensignal U₁=Pₙ+P_{f} eine vorbestimmte Rauschschwelle So übersteigt,
c) für den Fall, daß nur der ferne Teilnehmer spricht, wird die Verstärkung V_{S} im Sendepfad momentan auf den Wert α<1 und die Verstärkung V_{E} im Empfangspfad momentan auf den Wert 1 eingestellt;
d) für den Fall, daß nur der nahe Teilnehmer spricht, wird die Verstärkung V_{S} im Sendepfad auf den Wert 1 und die Verstärkung V_{E} im Empfangspfad auf den Wert β<1 eingestellt, wobei die Übergänge exponentiell mit der Zeitkonstanten τ₁ im Sendepfad und einer davon unabhängigen Zeitkonstanten im Empfangspfad verlaufen;
e) für den Fall der Gegensprache sind die Verstärkungen V_{S} und V_{E} gleich 1, wobei der Übergang im Empfangspfad momentan und der Übergang im Sendepfad exponentiell mit der Zeitkonstanten τ₁ erfolgt;
f) für den Fall fehlender Sprache wird die Verstärkung V_{S} auf den Wert 1 und die Verstärkung V_{E} auf den Wert β eingestellt, wobei die Übergänge exponentiell mit der Zeitkonstanten τ₀>τ₁ im Sendepfad und einer davon unabhängigen Zeitkonstanten im Empfangspfad verlaufen.

11. Verfahren nach Anspruch 10, **dadurch gekennzeichnet,**
**daß** die Unterscheidung der Gesprächsmodi "Sprechen" des fernen bzw. nahen Teilnehmers und "Gegensprache" getroffen wird, indem eine Steuergröße U₂=Pₙ/P_{f} mit einem vorbestimmten Schwellwert S₁<1 verglichen wird, wobei U₂<S₁ dem Sprechen des fernen Teilnehmers, U₂>1/S₁ dem Sprechen des nahen Teilnehmers und 1/S₁>U₂>S₁ der Gegensprache entspricht.

12. Verfahren nach Anspruch 10 oder 11, **dadurch gekennzeichnet,**
**daß** als Maß für die Sprachaktivität des nahen Teilnehmers das Signal Pₙ=P_{LRM}-P_{M} gebildet wird, wobei P_{LRM} proportional zur Leistung des Ausgangssignals U_{LRM} des Lautsprecher-Mikrofon-Raum-Systems und P_{M} proportional zur Leistung des Ausgangssignals U_{M} eines als Referenz dienenden adaptiven Filters (14) ist.

13. Verfahren nach Anspruch 10 oder 11, **dadurch gekennzeichnet,**
**daß** das Signal Pₙ als Maß für die Leistung des nahen Teilnehmers mittels eines Leistungsschätzers direkt aus dem Adaptionsfehler e gewonnen ist.

14. Verfahren nach einem der Ansprüche 10 bis 13, **dadurch gekennzeichnet, daß** zur Bestimmung der Größen P_{f}, P_{M}, P_{LRM}, Pₑ die jeweiligen Signale U_{f}, U_{M}, U_{LRM}, e quadriert und anschließend gemittelt werden.

## Claims

1. Device for echo suppression in a handsfree apparatus (18), particularly for a telephone, said device comprising an adaptive filter (14), a control circuit (13) as well as adjustable amplifiers (11, 16) disposed in the transmitting and receiving paths, the amplification of said amplifiers being controlled by the control circuit (13) with control signals Vᵢₙ, Vₒᵤₜ, the control circuit (13) containing a first short-time power estimator (1), said short-time power estimator (1) supplying at its output a signal P_{f} as a measure of the power of the received signal U_{f} from the remote subscriber, **characterized by** the following features:
a) provided in the control circuit are one or more further power estimators (6, 9), the output signals of which, either individually or in combination, form a measure Pₙ of the power of the local subscriber;
b) the variables Pₙ and P_{f} are used to form a first control variable U₁=Pₙ+P_{f} as well as a second control variable U₂=Pₙ/P_{f};
c) a control logic (3) processes the control variables U₁, U₂ according to the following instructions to form the output signals Vτ, V ₁ and V₂, wherein S₀ and S₁ are predetermined threshold values, S₁<1 and α , β<1:
c1) if U₁<S₀, then Vτ=0, V₁=1 and V₂=β;
c2) if U₁>S₀ and U₂<S₁, then Vτ=0, V₁=α and V₂=1;
c3) if U₁>S₀ and U₂>1/S₁, then Vτ=1, V₁=1 and V₂=β;
c4) if U₁>S₀ and 1/S₁>U₂>S₁, then Vτ=1, V₁=1 and V₂=1;
d) the signals V₁ and V₂, respectively, are each supplied to a non-linear shaping filter (4) and (8) associated with the transmitting and receiving paths of the handsfree apparatus (18), the output signals Vₒᵤₜ and Vᵢₙ of said shaping filters (4) and (8) controlling the amplification of the amplifiers (16) and (11) in proportion to the magnitude thereof, the control signal Vτ setting, depending on its level, two different time constants τ₀, τ₁ of the shaping filter (4).

2. Device according to claim 1, **characterized in that**
the signal Pₙ as a measure of the power of the local subscriber is obtained directly from the adaption error e by means of a power estimator.

3. Device according to claim 1, **characterized in that**
a second power estimator (6) supplies at its output a signal P_{LRM} as a measure of the power of the output signal U_{LRM} of the loudspeaker (12)-microphone (15)-room system and a third power estimator (9) is connected to the output of the adaptive filter (model) U_{M}, its output signal P_{M} being a measure of the power thereof, wherein the difference of the variables P_{LRM} and P_{M} is formed by means of a subtractor (10), said difference being an estimated value for the power Pₙ of the local subscriber.

4. Device according to any one of the preceding claims, **characterized in that**
the shaping filter (4) associated with the transmitting path is in the form of a minimum estimator and the shaping filter (8) associated with the receiving path is in the form of a maximum estimator.

5. Device according to any one of the preceding claims, **characterized in that**
τ₀>τ₁.

6. Device according to any one of the preceding claims, **characterized in that**
the attenuations α and/or β are changed depending on room parameters and/or noise voltages.

7. Device according to any one of the preceding claims, **characterized in that**
the respective signals U_{f}, U_{M}, U_{LRM}, e are squared and then averaged in the power estimators (1, 6, 9) in order to determine P_{f}, P_{M}, P_{LRM}, Pₑ.

8. Device according to any one of the preceding claims, **characterized in that**
the power estimators (1, 6, 9) form a value immune from the ambient noise by subtracting a lower power characteristic from an upper power characteristic.

9. Device according to any one of the preceding claims, **characterized in that**
the control logic (3) contains a timer, said timer being started whenever U₁>S₀ and 1/S₁>U₂>S₁ and then changing its binary output from 0 to 1 and returning to its original position after a preselected delay time T_{V}, and **in that** the output signals of the control logic (3) are set to the values Vτ=1, V₁=1 and V₂=1 as long as the output signal of the timer is 1.

10. Method for echo suppression in a handsfree apparatus (18) with a receiving path, consisting at least of a controllable amplifier (11) as well as a loudspeaker (12), and with a transmitting path, consisting at least of a controllable amplifier (16) as well as a microphone (15), the amplifications V_{S} and V_{E}, respectively, of the controllable amplifiers (11, 16) in the transmitting and receiving paths being adapted to the speech activity of the remote and local subscribers and, in order to determine the speech activity of the remote subscriber, the power P_{f} of the received signal U_{f} being determined with a power estimator (1),
**characterized by** the following features:
a) the speech activity of the local subscriber is determined by means of one or more further power estimators (6, 9), the output signals of which, either individually or in combination, represent a measure Pₙ of the power of the local subscriber;
b) starting from the quiescent values V_{S}=1 and V_{E}=β, the amplification of the controllable amplifiers (11, 16) is adjusted if the summation signal U₁=Pₙ+P_{f} exceeds a predetermined noise threshold S₀;
c) if only the remote subscriber is speaking, the amplification V_{S} in the transmitting path is set instantaneously to the value α<1 and the amplification V_{E} in the receiving path is set instantaneously to the value 1;
d) if only the local subscriber is speaking, the amplification V_{S} in the transmitting path is set to the value 1 and the amplification V_{E} in the receiving path is set to the value β<1, the transitions being made exponentially with the time constant τ₁ in the transmitting path and with a thereof independent time constant in the receiving path;
e) if both subscribers are speaking, the amplifications V_{S} and V_{E} are equal to 1, the transition in the receiving path being made instantaneously and the transition in the transmitting path being made exponentially with the time constant τ₁;
f) if neither subscriber is speaking, the amplification V_{S} is set to the value 1 and the amplification V_{E} is set to the value β, the transitions being made exponentially with the time constant τ₀>τ₁ in the transmitting path and with a thereof independent time constant in the receiving path.

11. Method according to claim 10, **characterized in that**
a distinction is made between the speech modes "one-way speech" of the remote or local subscriber and "two-way speech" **in that** a control variable U₂=Pₙ/P_{f} is compared with a predetermined threshold value S₁<1, wherein U₂<S₁ corresponds to speaking by the remote subscriber, U₂>1/S₁ corresponds to speaking by the local subscriber and 1/S₁>U₂>S₁ corresponds to speaking by both subscribers.

12. Method according to claim 10 or 11, **characterized in that**
the signal Pₙ=P_{LRM}-P_{M} is formed as a measure of the speech activity of the local subscriber, P_{LRM} being proportional to the power of the output signal U_{LRM} of the loudspeaker-microphone-room system and P_{M} being proportional to the power of the output signal U_{M} of an adaptive filter (14) serving as reference.

13. Method according to claim 10 or 11, **characterized in that**
the signal Pₙ as a measure of the power of the local subscriber is obtained directly from the adaption error e by means of a power estimator.

14. Method according to any one of claims 10 to 13, **characterized in that**
the respective signals U_{f}, U_{M}, U_{LRM}, e are squared and then averaged in order to determine the variables P_{f}, P_{M}, P_{LRM}, Pₑ.

## Revendications

1. Système de suppression d'écho sur un haut-parleur (18), plus précisément pour un téléphone, qui comporte un filtre adaptif (14), un circuit de commande (13), ainsi qu'un amplificateur réglable assigné à l'émission et la réception (11, 16), dont l'amplification est contrôlée par le circuit de commande (13) avec des signaux de commande Vᵢₙ, Vₒᵤₜ, dans lequel le circuit de commande (13) comprend un premier estimateur de puissance de courte durée (1), qui transmet à sa sortie un signal P_{f} comme mesure de la puissance du signal de réception U_{f} émis par un correspondant à distance, **caractérisé par** les caractéristiques suivantes,
a) dans le circuit de commande, un ou plusieurs estimateurs de puissance (6, 9) sont prévus, dont les signaux de sortie pris en eux-mêmes ou en combinaison forment la mesure Pₙ de la puissance du correspondant proche ;
b) à partir des grandeurs Pₙ et P_{f}, une première grandeur de commande U₁=Pₙ+P_{f} est définie, puis une seconde grandeur de commande U₂=Pₙ/P_{f} ;
c) une logique de commande (3) traite les grandeurs de commande U1, U2 selon la règle suivante relative aux signaux de sortie V_{τ}, V₁ et V₂, où S₀ et S₁ sont des valeurs seuil prédéfinies, S₁<1 et α, β<1 :
c1) si U₁<S₀, alors V_{τ}=0, V₁=1 et V₂=β
c2) si U₁>S₀ et U₂<S₁, alors V_{τ}=0, V₁=α et V₂=1
c3) si U₁>S₀ et U₂>1/S₁, alors V_{τ}=1, V₁=1 et V₂=β
c4) si U₁>S₀ et 1/S₁>U₂>S₁, alors V_{τ}=1, V₁=1 et V₂=1 ;
d) les signaux V1 et V2 sont dirigés vers un filtre de mise en forme (4) respectivement (8) non linéaire, assigné à une ligne de réception ou d'émission, dont le signal de sortie vᵢₙ ou vₒᵤₜ contrôle l'amplification de l'amplificateur (16) respectivement (11) proportionnellement à leur grandeur, dans lequel le signal de commande Vτ règle, indépendamment de son niveau, deux constantes de temps différentes τ₀, τ₁ du filtre de mise en forme (4).

2. Système selon la revendication 1, **caractérisé en ce que** le signal Pₙ est capté comme mesure de la puissance du correspondant proche au moyen d'un estimateur de puissance directement à partir du défaut d'adaptation e.

3. Système selon la revendication 1, **caractérisé en ce qu'**un deuxième estimateur de puissance (6) transmet à sa sortie un signal P_{LRM} comme mesure de la puissance du signal de sortie U_{LRM} du système haut-parleur (12) microphone (15) espace (LRM) et un troisième estimateur de puissance (9) est relié à la sortie du filtre adaptatif (Modèle) UM, dans lequel son signal de sortie P_{M} est une mesure de la puissance de ce dernier, et **en ce que**, au moyen d'un niveau de soustraction (10), est établie la différence entre les grandeurs P_{LRM} et P_{M}, qui correspond à la valeur seuil de la puissance P_{N} du correspondant proche.

4. Système selon l'une quelconque des revendications précédentes, **caractérisé en ce que** le filtre de mise en forme (4) assigné à la ligne d'émission est conçu comme un estimateur minimum et que le filtre de mise en forme (8) assigné à la ligne de réception est conçu comme un estimateur maximum.

5. Système selon l'une quelconque des revendications précédentes, **caractérisé en ce que** τ₀ est supérieur à τ₁.

6. Système selon l'une quelconque des revendications précédentes, **caractérisé en ce que** les affaiblissements α et/ou β sont modifiés indépendamment des paramètres spatiaux et/ou des tensions de bruit.

7. Système selon l'une quelconque des revendications précédentes, **caractérisé en ce que**, dans les estimateurs de puissance (1, 6, 9), pour définir P_{f}, P_{M}, P_{LRM}, Pₑ, les signaux respectifs U_{f}, U_{M}, U_{LRM}, e sont élevés au carré puis transmis.

8. Système selon l'une quelconque des revendications précédentes, **caractérisé en ce que** les estimateurs de puissance (1, 6, 9) établissent une valeur libérée du bruit environnant par la soustraction d'une valeur réelle de puissance inférieure à une valeur réelle de puissance supérieure.

9. Système selon l'une quelconque des revendications précédentes, **caractérisé en ce que** la logique de commande (3) comprend un temporisateur, qui, chaque fois que U₁>S₀ et 1/S₁>U₂>S₁, est lancé et modifie sa sortie binaire de 0 en 1, puis se remet dans sa position de sortie après une temporisation prédéfinie Tᵥ, et **en ce que** les signaux de sortie de la logique de commande (3) sont réglés sur les valeurs V_{τ}=1, V₁=1 et V₂=1, aussi longtemps que le signal de sortie du temporisateur reste sur 1.

10. Procédé de suppression de l'écho sur un haut-parleur (18) avec une ligne de réception, constituée d'au moins un amplificateur (11) réglable ainsi que un haut-parleur (12), et une ligne d'émission, constituée d'au moins un amplificateur (16) réglable ainsi qu'un microphone (15), dans lequel l'amplification VS respectivement VE des amplificateurs (11, 16) réglables, sur la ligne d'émission et de réception, est ajustée à l'activité vocale du correspondant à distance ou proche, et dans lequel, pour définir l'activité vocale du correspondant proche ou à distance, la puissance P_{f} du signal de réception U_{f} est déterminée à l'aide d'un estimateur de puissance (1), **caractérisé par** les caractéristiques suivantes :
a) au moyen d'un ou plusieurs estimateurs de puissance (6, 9) supplémentaires, dont les signaux de sortie pris en eux-mêmes ou en combinaison représentent une mesure Pₙ de la puissance du correspondant proche, si l'activité vocale du correspondant à distance est établie ;
b) l'amplification des amplificateurs (11, 16) réglables est ajustée à partir des valeurs de repos V_{S}=1 et V_{E}=β, lorsque le signal cumulé U₁=Pₙ+P_{f} dépasse un niveau de bruit S₀ prédéfini ;
c) au cas où seul le correspondant à distance parle, l'amplification V_{S} sur la ligne d'émission est momentanément réglée sur la valeur α<1 et l'amplification V_{E} sur la ligne de réception est momentanément réglée sur la valeur 1 ;
d) au cas où seul le correspondant proche parle, l'amplification V_{S} sur la ligne d'émission est momentanément réglée sur la valeur 1 et l'amplification V_{E} sur la ligne de réception est momentanément réglée sur la valeur β<1, où les transitions passent exponentiellement avec les constantes de temps τ₁ sur la ligne d'émission ou avec une des constantes de temps indépendantes sur la lignes de réception ;
e) pour le cas du retour vocal, les amplifications V_{S} et V_{E} sont égales à 1, où la transition sur la ligne de réception passe momentanément et la transition sur la ligne d'émission passe exponentiellement avec les constantes de temps τ₁ ;
f) en cas d'absence de voix, l'amplification VS est réglée sur la valeur 1 et l'amplification VE est réglée sur la valeur β, où les transitions passent exponentiellement avec les constantes de temps τ₀>τ₁ sur la ligne d'émission et avec une des constantes de temps indépendantes sur la lignes de réception.

11. Procédé selon la revendication 10, **caractérisé en ce que** la distinction des modes de conversations "Discuter" du correspondant proche ou à distance et "Retour vocal" s'effectue en comparant une grandeur de commande U₂=Pₙ/P_{f} avec une valeur seuil S₁<1 prédéfinie, où U₂<S₁ correspond au discours du correspondant à distance, U2>1/S1 correspond au discours du correspond proche et 1/S1>U2>S1 correspond au retour vocal.

12. Procédé selon la revendication 10 ou 11, **caractérisé en ce que** le signal Pₙ=P_{LRM}-P_{M} est établi comme mesure de l'activité vocale du correspondant proche, dans lequel P_{LRM} est proportionnel à la puissance du signal de sortie U_{LRM} du Système Haut-parleur Microphone Espace (LRM) et PM est proportionnel à la puissance du signal de sortie UM d'un des filtres (14) adaptatifs servant de référence.

13. Procédé selon la revendication 10 ou 11, **caractérisé en ce que** le signal Pₙ est capté comme mesure de la puissance du correspondant proche au moyen d'un estimateur de puissance directement à partir du défaut d'adaptation e.

14. Procédé selon les revendications 10 à 13, **caractérisé en ce que**, pour définir P_{f}, P_{M}, P_{LRM}, Pₑ, les signaux respectifs U_{f}, U_{M}, U_{LRM}, e sont élevés au carré puis transmis.
